# EUROPEAN PATENT APPLICATION

(11) **EP 4 213 080 A1**
(43) Date of publication of application: **19.07.2023**
(21) Application number: 22198339.8
(22) Date of filing: 28.09.2022
(51) Int. Cl.: G06Q 10/04, G05B 19/418, G06Q 50/04

(54) **PLANNING PROGRAM, PLANNING METHOD, AND INFORMATION PROCESSING APPARATUS**

(30) Priority: 17.01.2022 JP 2022004777
(71) Applicant: FUJITSU LIMITED, Kawasaki-shi, Kanagawa 211-8588 (JP)
(72) Inventor: Shimada, Daichi, Kawasaki-shi, Kanagawa, 211-8588 (JP)
(74) Representative: Hoffmann Eitle

(57) **Abstract**

A planning program that causes at least one computer to execute a process, the process includes specifying a process order of a plurality of types of objects in a work line for processing the plurality of types of objects; specifying a ratio of a number of objects of one of the plurality of types to the total number of the plurality of types for each of the plurality of types; acquiring an appearance probability obtained by subtracting the number of objects of a type of which the process order is determined, from a product of a process number and the ratio; selecting the type to be processed next by using the appearance probability; and changing a frequency of the selecting according to a completion ratio of a number of types which the selecting is completed to the total number of the plurality of types.

## Description

### FIELD

The embodiments discussed herein are related to a planning program, a planning method, and an information processing apparatus.

### BACKGROUND

A step planning for sequentially performing works on a plurality of types of target objects is performed.

Japanese Laid-open Patent Publication No. 6-196899 and Japanese Laid-open Patent Publication No. 2008-65751 are disclosed as related art.

### SUMMARY

### [TECHNICAL PROBLEM]

As an order of each type is determined, the same type is consecutive, in some cases. In this case, the same work may be repeated, and work efficiency may be decreased. It is considered to use a target tracking method in order to equalize a process order in a work line (referred to as a feeding order into the work line) for each type. Meanwhile, even when the target tracking method is used, local congestion may occur.

In one aspect, it is an object to provide a planning program, a planning method, and an information processing apparatus capable of suppressing local congestion in a feeding order into a work line.

### [SOLUTION TO PROBLEM]

According to an aspect of the embodiments, a planning program that causes at least one computer to execute a process, the process includes specifying a process order of a plurality of types of objects in a work line for processing the plurality of types of objects; specifying a ratio of a number of objects of one of the plurality of types to the total number of the plurality of types of objects for each of the plurality of types of objects; acquiring an appearance probability obtained by subtracting the number of objects of a type of which the process order is determined, from a product of a process number and the ratio; selecting the type to be processed next by using the appearance probability; and changing a frequency of the selecting according to a completion ratio of a number of types which the selecting is completed to the total number of the plurality of types.

### [ADVANTAGEOUS EFFECTS OF INVENTION]

It is possible to provide a planning program, a planning method, and an information processing apparatus capable of suppressing local congestion in a feeding order into a work line.

### BRIEF DESCRIPTION OF DRAWINGS

FIG. 1 is a diagram describing an overview of multi-type mixed-flow production;
FIGs. 2A and 2B are diagrams illustrating a work order in a multi-type mixed-flow work method;
FIGs. 3A to 3C are diagrams illustrating a target tracking method;
FIGs. 4A and 4B are diagrams describing a principle of dynamic adjustment of product selection in accordance with a product selection status;
FIG. 5A is a block diagram illustrating an overall configuration of an information processing apparatus according to an embodiment 1, and FIG. 5B is a block diagram illustrating a hardware configuration of the information processing apparatus;
FIG. 6 is a flowchart illustrating an example of a planning process executed by the information processing apparatus;
FIGs. 7A to 7F are diagrams illustrating product selection according to an embodiment 2;
FIG. 8 is a diagram illustrating an appearance probability calculated in the embodiment 2;
FIG. 9 is a flowchart illustrating an example of a planning process according to the embodiment 2;
FIG. 10 is a flowchart illustrating the example of the planning process according to the embodiment 2; and
FIG. 11 is a block diagram in a case where a result output by an output unit is output to a traveling machine.

### DESCRIPTION OF EMBODIMENTS

Before a description of embodiments, an overview of multi-type mixed-flow production will be described.

Inventories of various components are stored in a wide space in a warehouse. Each component for producing a plurality of types of products is stored in such a warehouse. Each component case in which a plurality of identical components are accommodated is accommodated in a predetermined component shelf. The components desirable for work in a factory are picked up in the warehouse.

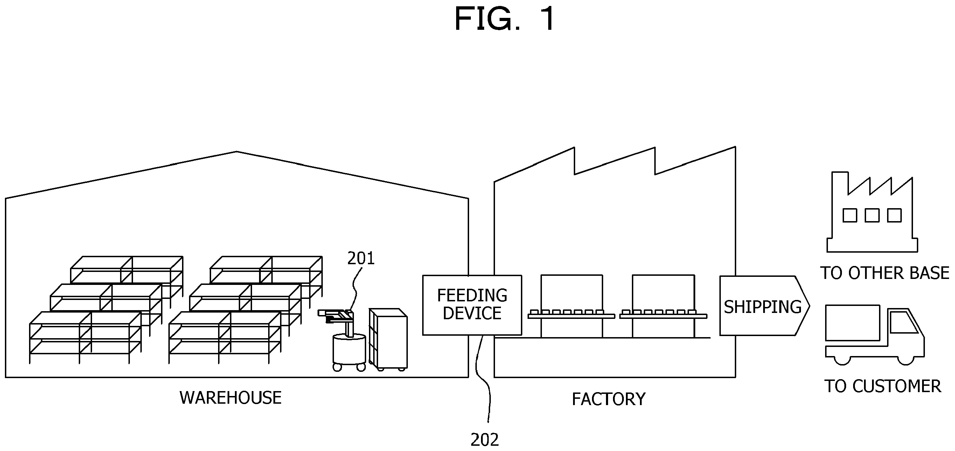

During the picking work of these components, a worker collects the components from the component case on each component shelf, or a traveling machine (automatic guided vehicle (AGV)) automatically collects the components, in some cases. For example, as illustrated in FIG. 1, a traveling machine 201 travels to a component shelf accommodating a component designated to be collected and picks up the component. For each product, one or more components are picked. At least some of the desirable components are different for each product type.

For each product type, a set of desirable components is sequentially fed into a work line of a factory. Accordingly, work for producing each product is sequentially performed in the factory. For example, for each set of each product type picked by the traveling machine 201, a feeding device 202 sequentially feeds the set into the work line in accordance with a designated feeding order.

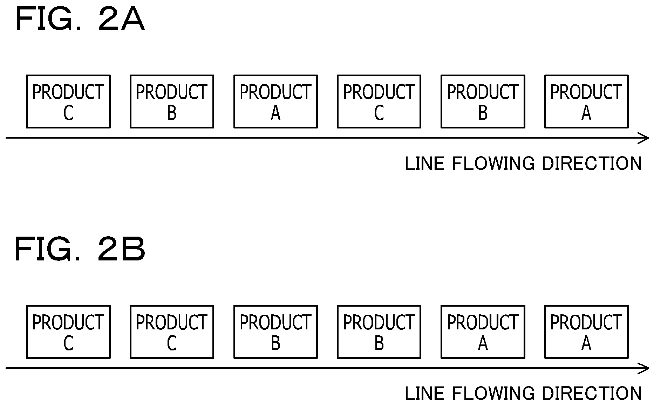

FIGs. 2A and 2B are diagrams illustrating a work order in a multi-type mixed-flow work method. According to the multi-type mixed-flow work method, different types of products are sequentially fed into one work line in accordance with a predetermined order, and are sequentially moved over the work line. As an example, it is assumed that products A to C are worked as a plurality of different product types. For each product type, one or more products are worked. For each product, at least a part of the desirable work is different.

As illustrated in FIG. 2A, after the product A flows, the product B flows, and then the product C, the product A, the product B, and the product C flow in this order. Since the identical product does not continuously flow in the example in FIG. 2A, a supply frequency of each component is distributed without bias. Since the identical work does not have to be repeated, work efficiency is not decreased.

By contrast, in FIG. 2B, after the product A flows, the product A flows, and then the product B, the product B, the product C, and the product C flow in this order. Since the identical product continues to flow in the example in FIG. 2B, the supply frequency of each component is biased. Since the identical work has to be repeated, the work efficiency may be decreased.

Therefore, it is desirable to equalize the order in which the products are fed into the work line. For example, it is considered to suppress the bias in the order of each product, by using a target tracking method. The target tracking method is a method of selecting a product having a high appearance probability for each index (feeding times), from each product.

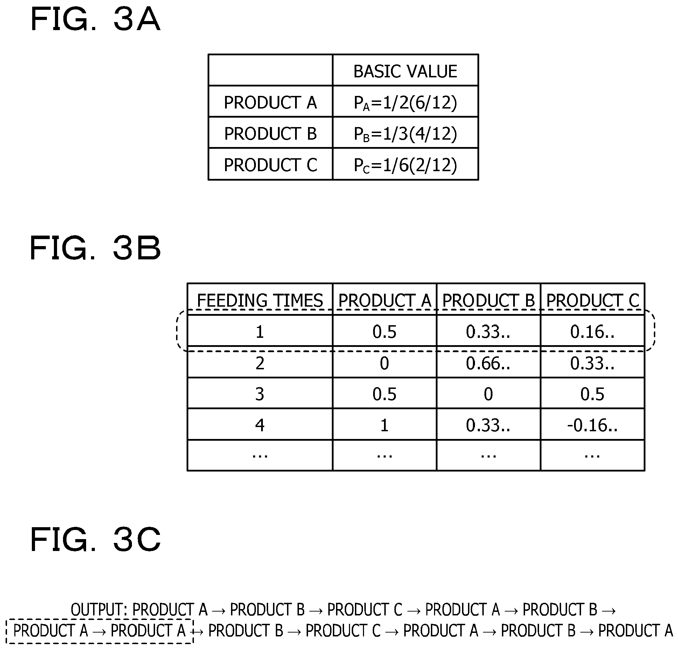

FIGs. 3A to 3C are diagrams illustrating the target tracking method. As an example, it is assumed that six products A, four products B, and two products C are worked in a work line. As illustrated in FIG. 3A, first, a basic value of an appearance probability is calculated for each product type. The basic value of the appearance probability is a ratio of the number of products of each type to the total number of products. Since the total number of products is 12, a basic value of the product A is 6/12 = 1/2. A basic value of the product B is 4/12 = 1/3. A basic value of the product C is 2/12 = 1/6.

Next, for each feeding time, an appearance probability of each product type is calculated. The feeding time = 1 represents work of feeding a first product into a work line. The feeding times = n represents work of feeding an n-th product into the work line. The appearance probability is calculated as feeding times x basic value - (the number of times the product type is selected up to that time).

As illustrated in FIG. 3B, when the feeding time = 1, an appearance probability of the product A is 0.5, an appearance probability of the product B is 0.33..., and an appearance probability of the product C is 0.16.... Since a product type having the highest appearance probability is selected in the target tracking method, the product A is selected as a first feeding product. At this point, the number of times the product A is selected is 1, and the number of times the product B and the product C are selected is 0.

When the feeding times = 2, the appearance probability of the product A is 0, the appearance probability of the product B is 0.66..., and the appearance probability of the product C is 0.33.... Therefore, the product B is selected as a second feeding product. At this point, the number of times the product A and the product B are selected is 1, and the number of times the product C is selected is 0.

When determining a feeding order of each product into the work line by the same procedure, as illustrated in FIG. 3C, an order of the product A, the product B, the product C, the product A, the product B, the product A, and the product A is output. Although the feeding order of each product is equalized to some extent in this order, the products A are continuously fed into the work line on the way. A reason why the identical product may be continuously selected in this manner is that the basic value of the appearance probability differs for each product. For example, since the basic value of the appearance probability is high for a large number of products, a possibility of being continuously selected is high.

It is considered to control local sparseness and congestion, by introducing an interval constraint and a continuity constraint. The interval constraint is a constraint such as "a designated product has to be spaced apart by X or more intervals". The continuity constraint is a constraint that "a designated product has not to be continuous by Y or more" or the like. Meanwhile, in this method, since a user has to set values of the interval constraint and the continuity constraint, the user has to reset the values every time a target product or the number of works of each product is changed. In this case, the number of man-hours of the user tends to be increased.

In the following embodiments, a configuration in which local congestion is suppressed by making it difficult to select a product, which is selected most recently, by dynamically adjusting product selection in each feeding time, in accordance with a product selection status up to that time will be described.

### [Embodiment 1]

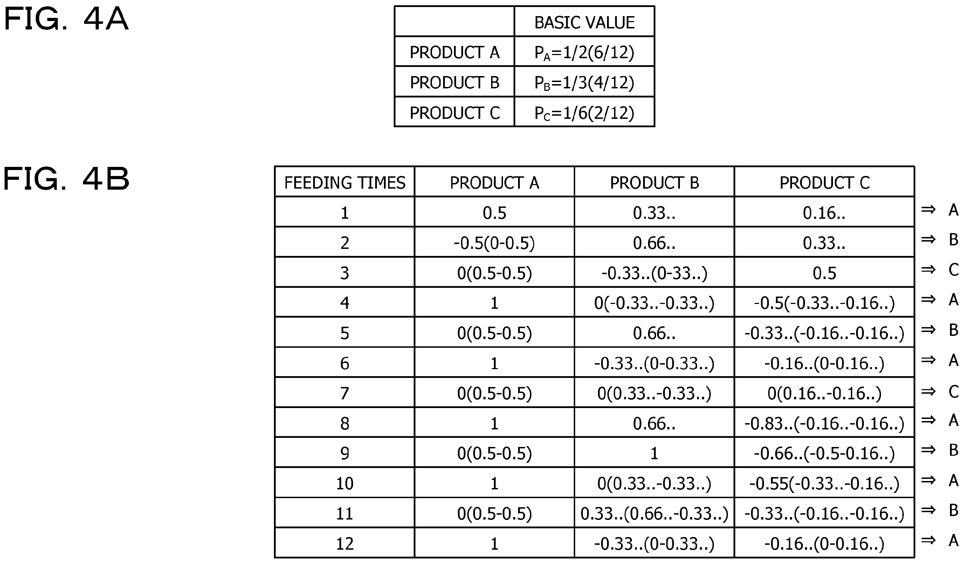

First, a principle of dynamic adjustment of product selection in accordance with a product selection status will be described. FIG. 4A and FIG. 4B are diagrams describing the principle described above. FIG. 4A illustrates a basic value of an appearance probability in the same manner as FIG. 3A.

According to Embodiment 1, an appearance probability of each product is calculated for each feeding time, and the appearance probability of each product type is corrected in accordance with a selection status of each product type.

Since the feeding time = 1 and no product type is selected yet, a correction value is not taken into consideration. Therefore, when the feeding time = 1, the appearance probability is calculated as feeding time (= 1) x basic value. Therefore, as illustrated in FIG. 4B, an appearance probability of the product A is 0.5, an appearance probability of the product B is 0.33..., and an appearance probability of the product C is 0.16.... Therefore, the product A is selected as a first feeding product. At this point, the number of times the product A is selected is 1, and the number of times the product B and the product C are selected is 0.

After the feeding times = 2, as in FIG. 3B, feeding times x basic value - (the number of times the product type is selected up to that time) is calculated as the appearance probability. Meanwhile, for each product type, when the product type is selected within a range corresponding to a reciprocal number of the basic value (decimal part is rounded down), the correction value is temporarily subtracted from the appearance probability.

For example, for each product type, it is determined whether or not the product type is selected in the most recent feeding time corresponding to the reciprocal number of the basic value. For the product A, the reciprocal number of the basic value is 2, so that it is determined whether or not the product A is selected in the two most recent feeding times up to this time. For the product B, the reciprocal number of the basic value is 4, so that it is determined whether or not the product B is selected in the most recent 4 feeding times up to this time. For the product C, the reciprocal number of the basic value is 6, so that it is determined whether or not the product C is selected in the most recent 6 feeding times up to this time.

The basic value is used as an example of a correction value in the example in FIG. 4B. For the feeding times = 2, the appearance probability of the product A is 0, the appearance probability of the product B is 0.66..., and the appearance probability of the product C is 0.33.... Since the product A is selected with the feeding time = 1, the basic value of 0.5 is subtracted from the appearance probability of 0, and the appearance probability is corrected to -0.5. In this case, the product B is selected as a second feeding product. At this point, the number of times the product A and the product B are selected is 1, and the number of times the product C is selected is 0.

When the feeding times = 3, the appearance probability of the product A is 0.5, the appearance probability of the product B is 0, and the appearance probability of the product C is 0.5. Since the product A is selected with the feeding time = 1, the basic value of 0.5 is subtracted from the appearance probability of 0.5, and the appearance probability is corrected to 0. Since the product B is selected with the feeding times = 2, the basic value of 0.33... is subtracted from the appearance probability of 0, and the appearance probability is corrected to -0.33.... In this case, the product C is selected as a third feeding product. At this point, the number of times the product A to the product C are selected is 1.

When the feeding times = 4, the appearance probability of the product A is 1, the appearance probability of the product B is 0.33..., and the appearance probability of the product C is -0.33.... Since the product B is selected with the feeding times = 2, the basic value of 0.33... is subtracted from the appearance probability of 0.33..., and the appearance probability is corrected to 0. Since the product C is selected with the feeding times = 3, the basic value of -0.16... is subtracted from the appearance probability of -0.33..., and the appearance probability is corrected to -0.5. In this case, the product A is selected as a fourth feeding product. At this point, the number of times the product A is selected is 2, and the number of times the products B and C are selected is 1.

When the feeding times = 5, the appearance probability of the product A is 0, the appearance probability of the product B is 0.66..., and the appearance probability of the product C is -0.16.... Since the product A is selected with the feeding times = 4, the basic value of 0.5 is subtracted from the appearance probability of 0.5, and the appearance probability is corrected to 0. Since the product C is selected with the feeding times = 3, the basic value of - 0.16... is subtracted from the appearance probability of -0.16..., and the appearance probability is corrected to -0.33.... In this case, the product B is selected as a fifth feeding product.

Hereinafter, in the same manner, the appearance probability is calculated for each product type, and the correction value is subtracted and corrected in accordance with the presence or absence of selection in the range corresponding to the reciprocal number of the basic value. The reciprocal number of the basic value has a meaning of an average value of selected intervals. Therefore, by correcting the appearance probability of a section referred to as the average value of the selected intervals, it is possible to suppress selection at intervals smaller than the average value of the selected intervals. For example, the correction value is subtracted from the appearance probability in the feeding times of 6 times, which is the reciprocal number of the basic value of the product C. Accordingly, it becomes difficult to select the product C in the feeding times of 6 times. On the other hand, for the product A, the correction value is only subtracted from the appearance probability in the feeding times of 2 times, which is the reciprocal number of the basic value, so that it is difficult to continuously select the product A, and an interval between the selected feeding times is also reduced. Therefore, the product A is selected with priority over the product C, and local congestion of a large number of products A is suppressed in the work order.

The correction value is not limited, for example. For example, a fixed value common to each product type may be used as the correction value. This fixed value may be a value adjustable by the user. As the correction value, basic value x coefficient α of each product type may be used. This coefficient α may be a value adjustable by the user.

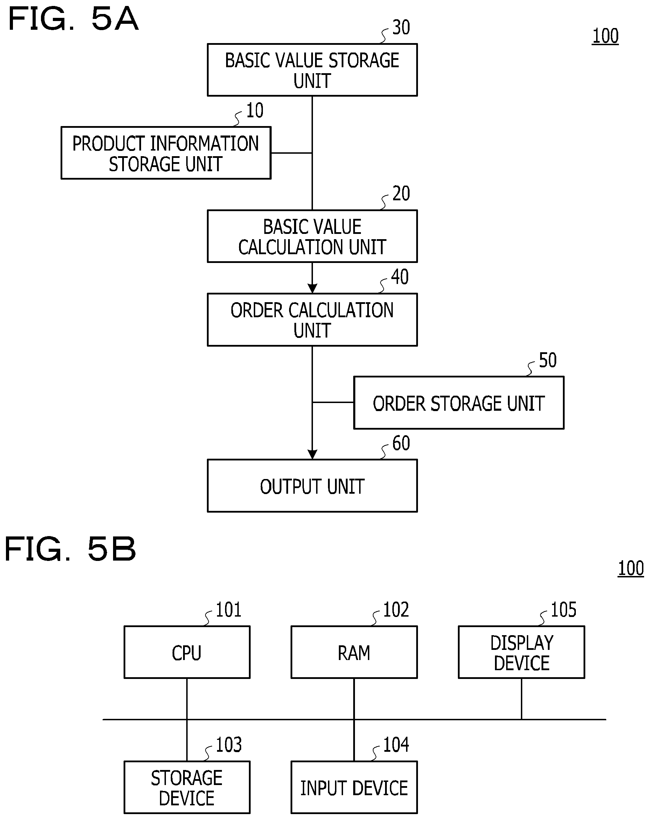

FIG. 5A is a block diagram illustrating an overall configuration of an information processing apparatus 100 according to an embodiment 1. As illustrated in FIG. 5A, the information processing apparatus 100 includes a product information storage unit 10, a basic value calculation unit 20, a basic value storage unit 30, an order calculation unit 40, an order storage unit 50, an output unit 60, and the like.

FIG. 5B is a block diagram illustrating a hardware configuration of the information processing apparatus 100. As illustrated in FIG. 5B, the information processing apparatus 100 includes a CPU 101, a random-access memory (RAM) 102, a storage device 103, an input device 104, a display device 105, and the like.

The CPU 101 is a central processing unit. The CPU 101 includes one or more cores. The RAM 102 is a volatile memory that temporarily stores a program to be executed by the CPU 101, data to be processed by the CPU 101, and the like. The storage device 103 is a nonvolatile storage device. As the storage device 103, for example, a read-only memory (ROM), a solid-state drive (SSD) such as a flash memory, a hard disk driven by a hard disk drive, or the like may be used. The storage device 103 stores a planning program. The input device 104 is an input device such as a keyboard or a mouse. The display device 105 is a display device such as a liquid crystal display (LCD). By the CPU 101 executing the planning program, the product information storage unit 10, the basic value calculation unit 20, the basic value storage unit 30, the order calculation unit 40, the order storage unit 50, and the output unit 60 are realized. Hardware such as dedicated circuits may be used as the product information storage unit 10, the basic value calculation unit 20, the basic value storage unit 30, the order calculation unit 40, the order storage unit 50, and the output unit 60.

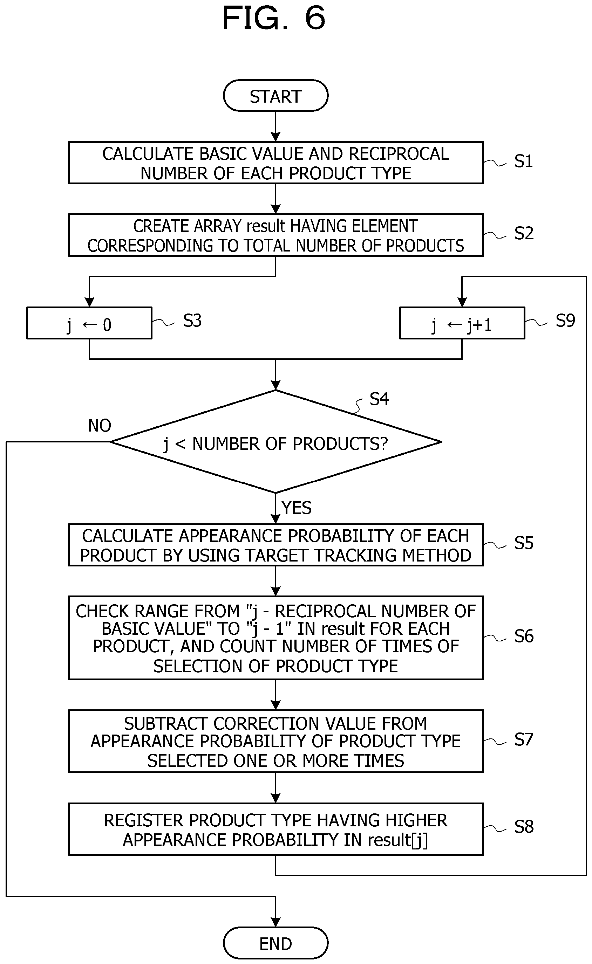

FIG. 6 is a flowchart illustrating an example of a planning process executed by the information processing apparatus 100. The basic value calculation unit 20 acquires product information from the product information storage unit 10, and calculates a basic value and a reciprocal number of the basic value for each product type (step S1). The product information includes the number of each product type and the total number of products included in each product type (total number of products). The basic value of each product is a ratio of the number of products of each type to the total number of products. For each product, the basic value storage unit 30 stores the basic value and the reciprocal number of the basic value.

Next, the order calculation unit 40 creates an array result having an element corresponding to the total number of products (step S2). A feeding order of each product type into a work line is registered in the array result. The array result is stored in the order storage unit 50.

Next, the order calculation unit 40 substitutes 0 for a variable j (step S3). The variable j is used to determine the number of feeding times with which a product type to be fed is specified. The variable j is 0 in a state in which any product type is not specified yet.

Next, the order calculation unit 40 determines whether or not the variable j is smaller than the total number of products (step S4). With this process, it is possible to determine whether or not the feeding order is specified for the products corresponding to the total number of products.

In a case where "Yes" is determined in step S4, the order calculation unit 40 calculates an appearance probability of each product type by using a target tracking method (step S5). With this process, the appearance probability is calculated by the same procedure as in FIG. 3B. For example, the appearance probability is calculated as feeding times x basic value - (the number of times the product type is selected up to that time).

Next, for each product type, the order calculation unit 40 checks a range from (j - reciprocal number of basic value) to (j - 1) of the array result, and counts the number of times of selection of each product type (step S6).

Next, according to the count result in step S6, the order calculation unit 40 subtracts a correction value from an appearance probability of a product type selected one or more times (step S7). Accordingly, the appearance probability of each product type is corrected.

Next, after step S7 is executed, the order calculation unit 40 registers a product type having the highest appearance probability in the array result[j] (step S8). result[j] represents the j-th index.

Next, the order calculation unit 40 adds 1 to the variable j (step S9). After that, the execution is performed again from step S4. In a case where "No" is determined in step S4, the order is specified for each product for the total number of products, so that the execution of the flowchart is ended. In this case, the output unit 60 outputs the specified order. The output order is displayed on the display device 105.

With the present embodiment, when a product to be fed for the next feeding time is selected by the target tracking method, a feeding frequency is dynamically adjusted in accordance with the product selection status up to that time. Accordingly, since it becomes difficult to select the product, which is selected most recently, it is possible to suppress local congestion.

### [Embodiment 2]

A method of creating a tree structure coupling respective product types and updating a probability of each node by using a target tracking method will be described in an embodiment 2.

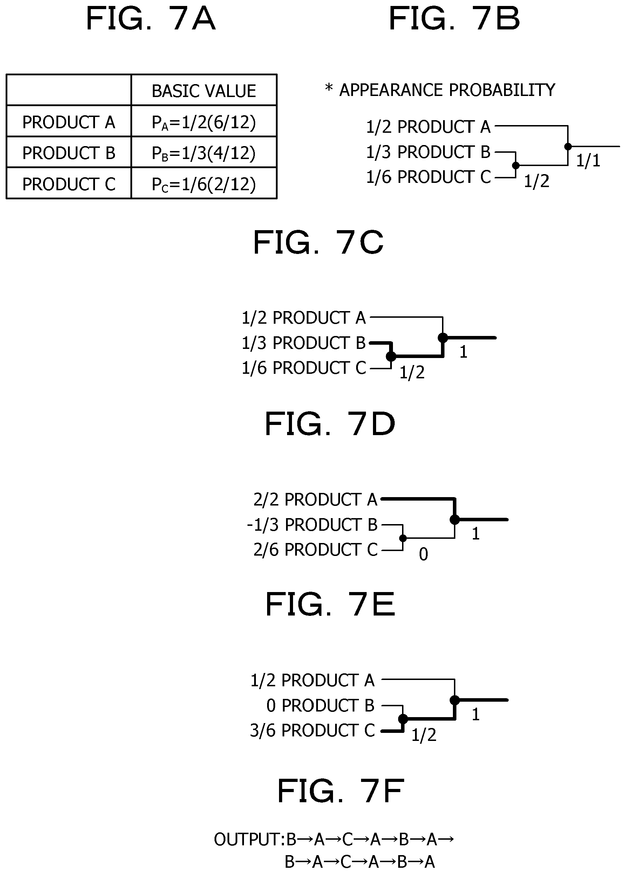

As illustrated in FIG. 7A, in the same manner as in the embodiment 1, it is assumed that a basic value of the product A is 6/12 = 1/2, a basic value of the product B is 4/12 = 1/3, and a basic value of the product C is 2/12 = 1/6.

Next, as illustrated in FIG. 7B, the order calculation unit 40 creates a tree structure by a greedy method in ascending order of the basic values such that a sum of the basic values at the respective nodes is (1/2)ⁿ. Accordingly, the respective product types are grouped. The node refers to each joining point in a case where the respective product types are joined in the tree structure. In the example in FIG. 7B, the sum of the basic values at the node at which the product B and the product C join together is 1/2. The sum of the basic values at the last node at which all the products join together is 1/1 corresponding to n = 0. In the tree structure created in this manner, product types having low basic values form one group sharing one node.

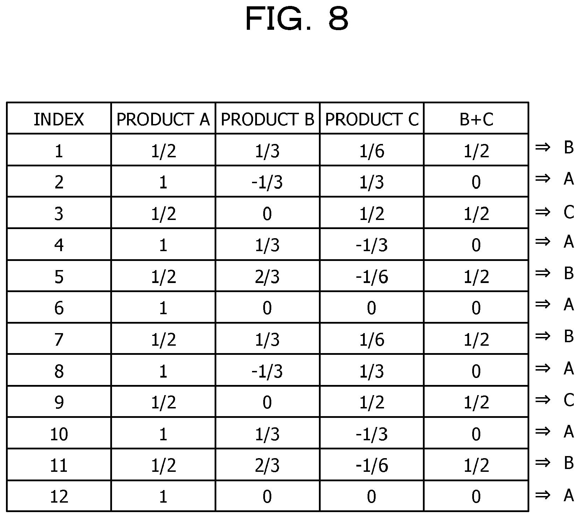

Next, as illustrated in FIG. 7C, the order calculation unit 40 calculates an appearance probability of each product type by using the target tracking method. Since no product type is selected yet when the feeding time = 1, the appearance probability has the same value as the basic value. FIG. 8 illustrates an example of the calculated appearance probability. FIG. 8 also illustrates a total value of the appearance probability of the product B and the appearance probability of the product C. From a head of the tree structure (joining point of all product types), the order calculation unit 40 follows a node having a higher appearance probability at each node. In the example in FIG. 7C, the appearance probability of the product A is 1/2, and a sum of the appearance probabilities of the products B and C is 1/2, which are the same value. In this case, priority is given to a product type having a lower basic value. Therefore, the product B and the product C are prioritized. Next, since the appearance probability of the product B is 1/3 and the appearance probability of the product C is 1/6, the product B is selected.

Next, for the feeding times = 2, the order calculation unit 40 calculates the appearance probability of each product type according to appearance probability = feeding times x basic value - (the number of times the product type is selected up to that time). As a result, the appearance probability of the product A is 1, the appearance probability of the product B is -1/3, the appearance probability of the product C is 1/3, and a sum of the appearance probabilities of the product B and the product C is 0. In this case, as illustrated in FIG. 7D, the product A is selected.

Next, for the feeding times = 3, the order calculation unit 40 calculates the appearance probability of each product type according to appearance probability = feeding times x basic value - (the number of times the product type is selected up to that time). As a result, the appearance probability of the product A is 1/2, the appearance probability of the product B is 0, the appearance probability of the product C is 1/2, and a sum of the appearance probabilities of the product B and the product C is 1/2. As this case, as illustrated in FIG. 7E, the appearance probability of the product A is 1/2, and a sum of the appearance probabilities of the product B and the product C is 1/2, which are the same value. In this case, priority is given to a product type having a lower basic value. Therefore, the product B and the product C are prioritized. Next, since the appearance probability of the product B is 0 and the appearance probability of the product C is 1/2, the product C is selected.

Hereinafter, the appearance probability is calculated for each product type for each feeding time in the same manner. FIG. 7F and FIG. 8 illustrate the results. A feeding order of the product B, the product A, the product C, the product A, the product B, the product A, the product B, the product A, the product C, the product A, the product B, and the product A is output. According to this example, continuous selection of the same product type is suppressed.

Since a sum of the basic values at each node is (1/2)ⁿ, it is difficult to select the same product type in a short period of time. Since the target tracking method is used, the appearance probability of the node including the product type selected most recently is decreased, and the appearance probability of the other nodes is increased. Since the product types having the low basic values are grouped as the nodes, continuous selection of these product types may be suppressed, and sparseness and congestion of the product type having the high basic value may be suppressed.

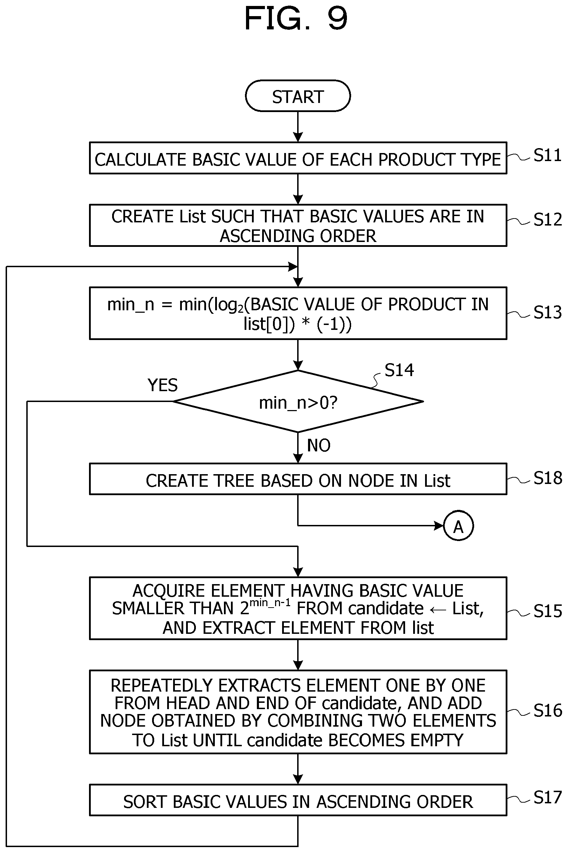

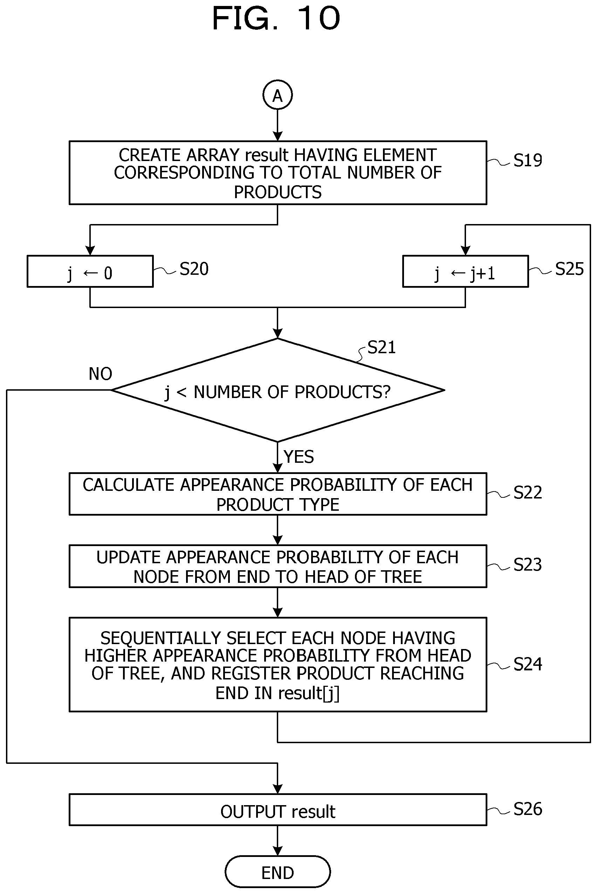

FIGs. 9 and 10 are flowcharts illustrating an example of a planning process according to the embodiment 2. The basic value calculation unit 20 acquires product information from the product information storage unit 10, and calculates a basic value for each product (step S11). The basic value storage unit 30 stores the basic value for each product.

Next, the order calculation unit 40 creates List by arranging product types such that the basic values are in ascending order (step S12).

Next, the order calculation unit 40 sets min_n = min(log₂(basic value of product type in list[0]) x (-1)) (step S13).

Next, the order calculation unit 40 determines whether or not min_n is larger than 0 (step S14).

In a case where "Yes" is determined in step S14, the order calculation unit 40 extracts an element having a basic value smaller than 2^{min_n-1} from List, and stores the element in a candidate (step S15).

Next, until the candidate becomes empty, the order calculation unit 40 repeatedly extracts an element one by one from a head and an end of the candidate and adds a node obtained by combining the two elements to List (step S16). A total value of the two basic values is set as a basic value of a new node.

Next, the order calculation unit 40 updates List by sorting the basic values in ascending order (step S17). After that, the execution is repeated again from step S13.

In a case where "No" is determined in step S14, a tree structure for each product type is completed. Based on the nodes in List, the order calculation unit 40 creates the tree structure (step S18).

Next, the order calculation unit 40 creates the array result having elements corresponding to the total number of products (step S19). A feeding order of each product type into a work line is registered in the array result.

Next, the order calculation unit 40 substitutes 0 for the variable j (step S20). The variable j is used to determine the number of feeding times with which a product type to be fed is specified. The variable j is 0 in a state in which any product type is not specified yet.

Next, the order calculation unit 40 determines whether or not the variable j is smaller than the number of products (step S21). With this process, it is possible to determine whether or not the feeding order is specified for the products corresponding to the total number of products.

In a case where "Yes" is determined in step S20, the order calculation unit 40 calculates an appearance probability of each product type by using a target tracking method (step S22). With this process, the appearance probability is calculated by the same procedure as in FIG. 3B. For example, the appearance probability is calculated as feeding times x basic value - (the number of times the product type is selected up to that time).

Next, the order calculation unit 40 updates the appearance probability of each node from an end to a head of the tree (step S23).

Next, the order calculation unit 40 sequentially selects each node having a higher appearance probability from the head of the tree, and registers a product reaching an end in the array result[j] (step S24). result[j] represents the j-th index.

Next, the order calculation unit 40 adds 1 to the variable j (step S25). After that, the execution is performed again from step S20. In a case where "No" is determined in step S20, the order is specified for each product for the total number of products, so that the execution of the flowchart is ended. In this case, the output unit 60 outputs the specified order (step S26). The output order is displayed on the display device 105.

Also in the present embodiment, when a product to be fed for the next feeding time is selected by the target tracking method, a feeding frequency is dynamically adjusted in accordance with the product selection status up to that time. Accordingly, since it becomes difficult to select the product, which is selected most recently, it is possible to suppress local congestion.

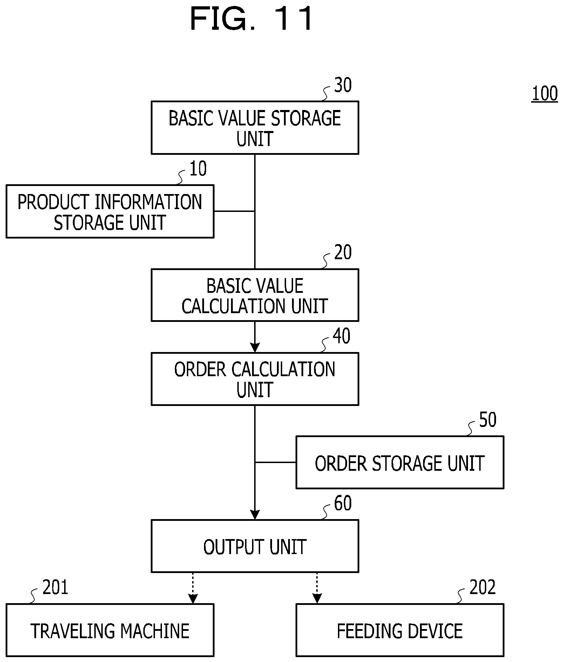

Although the result output by the output unit 60 is output to the display device 105 in each example described above, the result may be output to the traveling machine 201 that automatically travels in a warehouse. FIG. 11 is a block diagram illustrating this case. As illustrated in FIG. 11, a result output by the output unit 60 is output to the traveling machine 201 and the feeding device 202. The traveling machine 201 collects products from a component product case on each component shelve such that a feeding order received from the output unit 60 is realized. The result output by the output unit 60 may be output to the feeding device 202. In this case, the feeding device 202 sequentially feeds each set of each product type into a work line in accordance with a designated feeding order. The traveling machine 201 includes a CPU, a RAM, a storage device, and the like, and for example, a control program or the like for controlling a traveling route or the like of the traveling machine 201 is stored in the storage device, order information indicating a feeding order received from the output unit 60 is stored in the RAM, and the CPU controls an operation of the traveling machine 201 based on the control program and the order information. The feeding device 202 includes a CPU, a RAM, a storage device, and the like, and for example, a control program or the like for controlling a feeding process or the like to be executed by the feeding device 202 is stored in the storage device, order information indicating the feeding order received from the output unit 60 is stored in the RAM, and the CPU controls an operation of the feeding device 202 based on the control program and the order information.

For each example described above, a product is an example of an object to be processed in a work line in accordance with a predetermined order. The order calculation unit 40 is an example of a selection unit that specifies, in a process of sequentially specifying a process order of a plurality of types of objects in a work line for processing the plurality of types of objects, a ratio of the number of objects of each of the types to the total number of the plurality of types of objects as a basic value, calculates, as an appearance probability, a value obtained by subtracting the number of objects of the type having the already determined process order from a product of a process number and the basic value for each of the respective types, and selects the type to be processed next by using the calculated appearance probability.

Although the embodiments of the present disclosure have been described above in detail, the present disclosure is not limited to such particular embodiments and may be variously modified and changed within the scope of the gist of the present disclosure described in claims.

## Claims

1. A planning program that causes at least one computer to execute a process, the process comprising:
specifying a process order of a plurality of types of objects in a work line for processing the plurality of types of objects;
specifying a ratio of a number of objects of one of the plurality of types to the total number of the plurality of types of objects for each of the plurality of types of objects;
acquiring an appearance probability obtained by subtracting the number of objects of a type of which the process order is determined, from a product of a process number and the ratio;
selecting the type to be processed next by using the appearance probability; and
changing a frequency of the selecting according to a completion ratio of a number of types which the selecting is completed to the total number of the plurality of types.

2. The planning program according to claim 1, wherein the selecting includes:
correcting the appearance probability according to the completion ratio; and
selecting the type to be processed next according to the corrected appearance probability.

3. The planning program according to claim 2, wherein the correcting includes correcting the appearance probability, when the type for which the process order is specified is selected in the number of times of being processed according to a reciprocal number of the ratio.

4. The planning program according to claim 2 or 3, wherein the correcting includes subtracting the ratio from the appearance probability.

5. The planning program according to claim 1, wherein the selecting includes:
dividing the plurality of types into groups so that a sum of the ratio of each of the plurality of types is (1/2)ⁿ;
selecting a group of a highest sum of the appearance probability for each group; and
selecting the type to be processed next by selecting a type of a highest appearance probability in the selected group.

6. The planning program according to claim 5, wherein the selecting includes selecting a group which includes a lower ratio when total values of the appearance probability are identical for the groups.

7. A planning method for a computer to execute a process comprising:
specifying a process order of a plurality of types of objects in a work line for processing the plurality of types of objects;
specifying a ratio of a number of objects of one of the plurality of types to the total number of the plurality of types of objects for each of the plurality of types of objects;
acquiring an appearance probability obtained by subtracting the number of objects of a type of which the process order is determined, from a product of a process number and the ratio;
selecting the type to be processed next by using the appearance probability; and
changing a frequency of the selecting according to a completion ratio of a number of types which the selecting is completed to the total number of the plurality of types.

8. The planning method according to claim 7, wherein the selecting includes:
correcting the appearance probability according to the completion ratio; and
selecting the type to be processed next according to the corrected appearance probability.

9. The planning method according to claim 8, wherein the correcting includes correcting the appearance probability, when the type for which the process order is specified is selected in the number of times of being processed according to a reciprocal number of the ratio.

10. The planning method according to claim 8 or 9, wherein the correcting includes subtracting the ratio from the appearance probability.

11. An information processing apparatus comprising:
a selection unit that:
specifies a process order of a plurality of types of objects in a work line for processing the plurality of types of objects,
specifies a ratio of a number of objects of one of the plurality of types to the total number of the plurality of types of objects for each of the plurality of types of objects,
acquires an appearance probability obtained by subtracting the number of objects of a type of which the process order is determined, from a product of a process number and the ratio,
selects the type to be processed next by using the appearance probability, and
changes a frequency of the selecting according to a completion ratio of a number of types which the selecting is completed to the total number of the plurality of types.

12. The information processing apparatus according to claim 11, wherein the selection unit is further configured to:
correct the appearance probability according to the completion ratio, and
select the type to be processed next according to the corrected appearance probability.

13. The information processing apparatus according to claim 12, wherein the selection unit is further configured to
correct the appearance probability, when the type for which the process order is specified is selected in the number of times of being processed according to a reciprocal number of the ratio.

14. The information processing apparatus according to claim 12 or 13, wherein the selection unit is further configured to
subtract the ratio from the appearance probability.
